# EUROPEAN PATENT SPECIFICATION

(11) **EP 1 641 098 B1**
(45) Date of publication and mention of the grant of the patent: **13.05.2020**
(21) Application number: 03736261.3
(22) Date of filing: 26.06.2003
(51) Int. Cl.: H02J 3/50, H02J 3/18, B63H 21/17

(54) **MOTOR DRIVE SYSTEM**
MOTORANTRIEBSSYSTEM
SYSTEME D'ENTRAINEMENT POUR MOTEURS

(43) Date of publication of application: 29.03.2006
(73) Proprietor: Toshiba Mitsubishi-Electric Industrial Systems Corporation, Minato-ku, Tokyo 108-0073 (JP)
(72) Inventor: TOYODA, Masaru, Mitsubishi Denki Kabushiki Kaisha, Chiyoda-ku, Tokyo 100-8310 (JP); KOYAMA, Masato, Mitsubishi Denki Kabushiki Kaisha, Chiyoda-ku, Tokyo 100-8310 (JP); KAMIYAMA, Isao, Mitsubishi Denki Kabushiki Kaisha, Chiyoda-ku, Tokyo 100-8310 (JP)
(74) Representative: Hoffmann Eitle
(86) International application number: PCT/JP2003/008117
(87) International publication number: WO 2005/002038

(56) References cited:
- EP-A1- 0 633 641
- WO-A1-01/00485
- WO-A1-02/100716
- DE-C1- 19 737 590
- JP-A- 9 215 201
- JP-A- 2000 037 082
- JP-A- 2000 037 082
- US-A1- 2002 130 639

## Description

### Technical Field

The present invention relates to an electric motor drive system. More particularly, it relates to an electric motor drive system suitable for an LNG plant or for marine electric propulsion.

### Background Art

As compared with a conventional propulsion system for directly driving a screw by a diesel engine, an electric propulsion system to which an electric motor drive system is applied has advantages of less vibration, more ease of adjustment of the direction of rotation and the number of rotations of the screw, with higher efficiency, and the like. For this reason, the electric motor drive system has been increasingly applied to a luxury liner putting importance to riding comfort, an ice breaker repeatedly traveling back and forth, and the like.

Whereas, for an LNG plant for liquefying a natural gas, a mechanical power generator such as a gas turbine or a steam turbine has been conventionally used for driving a compressor for use in liquefaction equipment. However, the electric motor drive system has been started to be applied thereto as with the marine electric propulsion system because of advantages of less exhaust gas, the less efficiency, and the like.

As a conventional electric motor drive system for marine electric propulsion, for example, the one as shown in WO 02/100716A1 is used, wherein a plurality of generators each of which is driven by a diesel engine and generates an AC voltage are connected in parallel to a common bus, and to a plurality of electric power conversion devices each of which is connected to the common bus, and outputs an AC voltage of variable amplitude and variable frequency, a plurality of electric motors each for driving a screw are respectively connected.

In such an electric motor drive system, when any diesel engine becomes faulty during operation, a breaker disposed between the generator driven by this diesel engine and the common bus is opened. On the other hand, the residual diesel engines increase in load because the supply of the mechanical power from the faulty diesel engine has been ceased, resulting in a reduction of the number of rotations. Accordingly, the output voltage of each residual generator, and further the amplitude and the frequency of the common bus voltage are reduced. When the amplitude and the frequency thereof are reduced to a previously set lower limit value or smaller, it is judged that abnormal conditions have occurred in the system. Then, the breakers between the residual generators and the common bus are opened. This results in the occurrence of the problem of system down that the supply of the mechanical power to the screws is stopped.

On the other hand, when any electric power conversion device becomes faulty, the breaker disposed between the transformer on the faulty electric power conversion device side and the common bus is opened. In this case, the supply of the mechanical power to the screw on the faulty electric power conversion device side is ceased, resulting in a reduction of the load of each diesel engine, and an increase in the number of rotations thereof. Accordingly, the output voltage of each generator, and further, the amplitude and the frequency of the voltage of the common bus increase. When the amplitude and the frequency thereof are reduced to a previously set upper limit value or greater, it is judged that abnormal conditions have occurred in the system. Then, the breakers between the respective generators and the common bus are opened. This results in the occurrence of the problem of system down that the supply of the mechanical power to the respective screws is stopped.

In general, for the diesel engine, the control of the number of rotations by the adjustment of the amount of fuel to be supplied (so-called governor control) is carried out. For the generator, the control of the output voltage amplitude by the exciting current control is carried out. Namely, the frequency fluctuations of the voltage of the common bus is suppressed by the governor control of the diesel engine, and the amplitude fluctuations thereof is suppressed by the exciting current control of the generator. However, the speed of response of the governor control or the exciting current control is as slow as on the order of seconds. Therefore, it is difficult to suppress down to a trouble-free level the frequency fluctuations and the amplitude fluctuations of the common bus voltage caused when at least one of the diesel engine, the generator, the electric power conversion device, and the electric motor becomes faulty, so that the problem of system down tends to occur.

In particular, for the electric motor drive system for marine electric propulsion or for an LNG plant, the number of the diesel engines, the generators, the electric power conversion devices, and the electric motors is desirably small in order to suppress the investment cost. For this reason, the effect brought by the fault of one diesel engine or electric power conversion device on the amplitude / frequency fluctuations of the common bus voltage is large.

### Summary

In view of the foregoing problem, it is an object of this invention to achieve the following requirement. For an electric motor drive system wherein a plurality of generators each of which is driven by a mechanical power generation device for outputting a mechanical power by combustion of a liquid or gas fuel and outputs an AC voltage are connected in parallel to a common bus, and to a plurality of electric power conversion devices connected to the common bus and for outputting an AC voltage of variable amplitude and variable frequency, a plurality of electric motors for driving a load machine are respectively connected, the oscillation of voltage of the electric power system is effectively suppressed, which enables the driving of the electric motors with more stability, even when at least one of the mechanical power generation device, the generator, the electric power conversion device, and the electric motor becomes faulty.

In order to achieve the foregoing object, the present invention provides an electric motor drive system as set out in each of Claims 1 and 2. Optional features are set out in the dependent claims.

### Brief Description of the Drawings

FIG. 1 is a diagram showing a system configuration in Background Example 1;
FIG. 2 is a phenomenon diagram in a conventional system;
FIG. 3 is a phenomenon diagram in a conventional system;
FIG. 4 is a phenomenon diagram in Background Example 1;
FIG. 5 is a diagram showing a system configuration in Embodiment 1 of this invention;
FIG. 6 is a diagram showing a system configuration in Background Example 2;
FIG. 7 is a diagram showing a system configuration in Embodiment 2 of this invention;
FIG. 8 is a diagram showing a system configuration in Embodiment 3 of this invention;
FIG. 9 is a diagram showing a system configuration in Embodiment 4 of this invention;
FIG. 10 is a diagram showing a system configuration in Background Example 3;
FIG. 11 is a block diagram showing a configuration of an essential part in Background Example 1; and
FIG. 12 is a vector diagram for illustrating the operation of FIG. 11.

### Description of Embodiments

Embodiments of the invention, and background examples that are helpful for understanding the invention, will now be described with reference to the accompanying drawings.

### Background Example 1

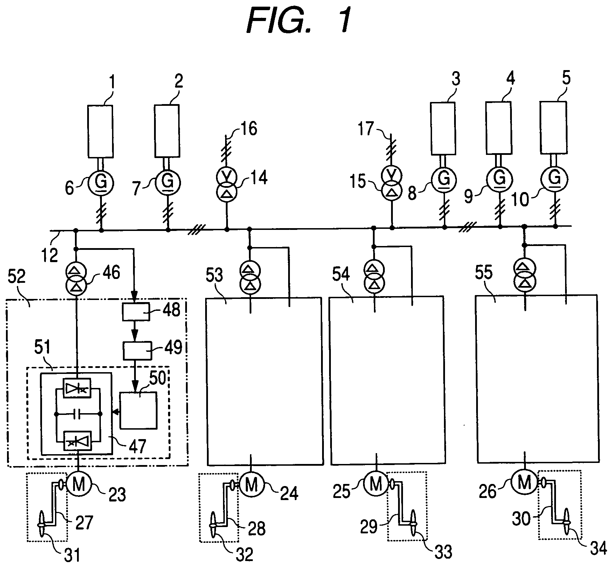

Below, Background Example 1 will be described by reference to the drawings. An electric motor drive system shown in FIG. 1 is driven by diesel engines 1 to 5. A plurality of generators 6 to 10 for generating an AC voltage are connected in parallel to a common bus 12. In addition, a plurality of electric motors 23 to 26 such as induction motors for driving screws 31 to 34, respectively, are connected to a plurality of electric power conversion devices 52 to 55 connected to the common bus 12 via transformers 46 and for outputting an AC voltage of variable amplitude and variable frequency. Whereas, low tension distribution systems 16 and 17 are connected to the common bus 12 via transformers 14 and 15, respectively.

Then, the respective electric power conversion devices 52 to 55 each include, as typically shown in the electric power conversion device 52, a power inverter circuit 47 capable of individually controlling the reactive power and the active power of the input power, a voltage detection circuit 48 for detecting the voltage of the common bus 12, an AC voltage control circuit 49 for comparing the feedback voltage value which is the output from the voltage detection circuit 48 with a fixed reference voltage value, and computing the reactive power command value, and a main circuit control device 50 for controlling the reactive power of the input power to the power inverter circuit 47 and having a control function of speed controlling of the electric motor 23. Incidentally, a power converter 51 is composed of the power inverter circuit 47 and the main circuit control device 50.

As the electric power conversion device 52, for example, mention may be made of an electric power conversion device comprising a converter-inverter system (DC link system) composed of a high power factor converter for converting AC power to DC power, a smoothing capacitor for smoothing the converted DC power, and a self-excited inverter for converting DC power to AC power, and driving the electric motor 23, or an electric power conversion device comprising AC-AC conversion system by a matrices converter.

Thus, the screws 31 to 34 are driven at a variable speed by means of the electric motors 23 to 26 via rotation shafts 27 to 30, respectively, as shown in Fig. 1. Whereas, the electric motors 23 to 26 are driven at a variable speed by means of the electric power conversion devices 52 to 55, respectively. Whereas, the electric power necessary for variable speed driving is supplied from the common bus 12 via the transformers 46 (the number of which is 4). Further, to the common bus 12, the output terminals of the generators 6 to 10 to be driven by means of the diesel motors 1 to 5 are connected. With such a system configuration, the mechanical power outputted from the diesel engines 1 to 5 are converted to the electric power by means of the generators 6 to 10, and finally utilized as the mechanical power for operating the screws 31 to 34 at a variable speed via the common bus 12, the transformers 46, the electric power conversion devices 52 to 55, the electric motors 23 to 26, and the rotation shafts 27 to 30. Further, a part of the electric power resulting from the generators 6 to 10 is also supplied to other load devices connected to the low tension distribution systems 16 and 17 via the transformers 14 and 15.

Incidentally, although not shown in FIG. 1, breakers are respectively disposed between the generators 6 to 10 and the common bus 12, and between the transformers 46 and the common bus 12. When the abnormal conditions are encountered on the generator side or on the electric motor side, the breaker at the corresponding site is opened and cut off from the common bus 12.

In the electric motor drive system, the power generating system including the diesel engines 1 to 5 and the generators 6 to 10 carries out power generation so as to output an AC power of a prescribed frequency and voltage. For example, when the electric power consumed by the load increases within the rated range of the power generating system, the output from the diesel engine 1 is increased, so that the output power from the generator 6 is made equal to the power consumption. As a result, the frequency and the voltage of the common bus 12 are kept at prescribed values.

Then, the electric power conversion device 52 receives an AC power from the transformer 46, and outputs an AC power of variable amplitude / variable amplitude for driving the electric motor 23 based on the external output command value not shown. As a result, it performs driving control of the electric motor 23 so that the rotation speed of the electric motor 23 becomes a desirable value.

In such a situation, the AC voltage control circuit 49 included in the electric power conversion device 52 computes a reactive power command value corresponding to the reactive power necessary for keeping the voltage of the common bus 12 detected at the voltage detection circuit 48 at a prescribed value, and supplies it to the main circuit control device 50 of the power converter 51. This controls the reactive power exchanged between the electric power conversion device 52 and the common bus 12 according to the voltage fluctuations of the common bus 12, thereby to control the amplitude of the common bus voltage to be constant. The AC voltage control circuits included in the other respective electric conversion devices 53 to 55 also perform the same operation.

As a result of this, even when at least one of the diesel engines 1 to 5, the generators 6 to 10, the electric power conversion devices 52 to 55, and the electric motors 23 to 26 becomes faulty, it is possible to effectively suppress the oscillation of voltage of the electric power system, and to drive the electric motors with more stability.

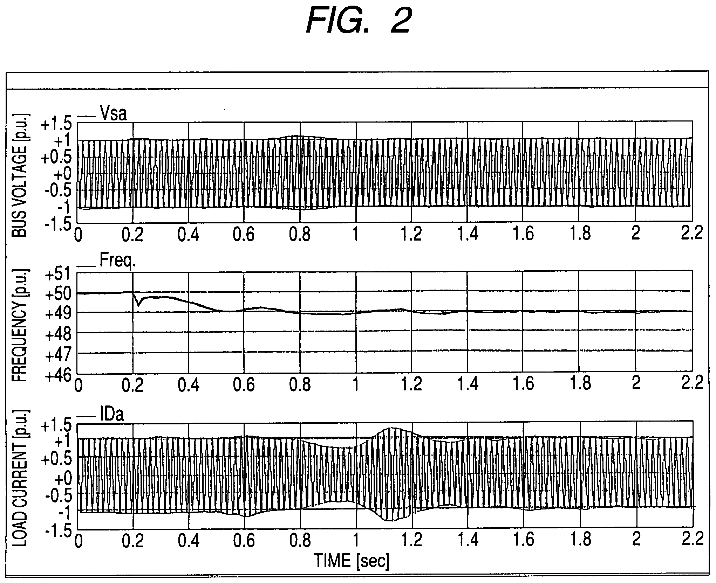

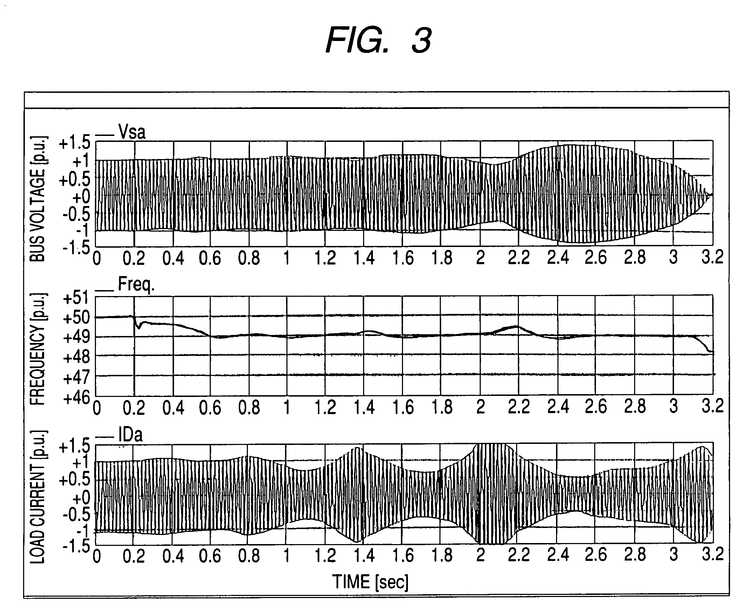

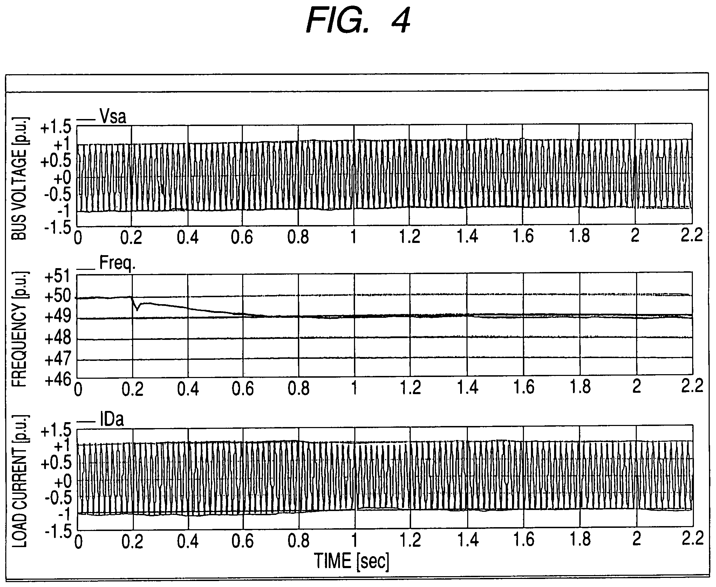

FIGS. 2 to 4 are phenomenon diagrams each showing the fluctuations in the system voltage and the system frequency of the common bus 12 when the load current has fluctuated in the electric motor drive system in accordance with a conventional electric motor drive system or Background Example 1. When the voltage fluctuations generated at overload are controllable by the AC voltage control circuit generally included in the power generation system, as shown in FIG. 2, the continuation of the operation is possible by suppressing the power consumption, and keeping the system voltage / frequency at prescribed values. Whereas, when the voltage fluctuations are difficult to suppress by the AC voltage control circuit included in the power generation system, as shown in FIG. 3, the voltage fluctuations gradually expand, leading to the stop of the power generation system in the end. In contrast to this, in Background Example 1, the voltages of the common bus 12 are individually detected, and the reactive powers exchanged between the respective electric power conversion devices 52 to 55 and the common bus 12 according to the detected voltage are controlled. Therefore, it is possible to keep the voltage of the common bus 12 at a prescribed value. FIG. 4 shows this, wherein the voltage of the common bus 12 is kept at a prescribed value, which implements the continuation of the operation of the electric motors with more stability.

Thus, in Background Example 1, the respective electric power conversion devices 52 to 55 individually detect the voltage of the common bus 12. By controlling the reactive power exchanged with the common bus 12 according to the detected voltage, the amplitude of the common bus voltage is controlled to be constant. Therefore, it is possible to keep the voltage of the common bus 12 at a prescribed value, and to suppress the oscillation of the voltage of the electric power system. This enables the more stable operation of the electric motors.

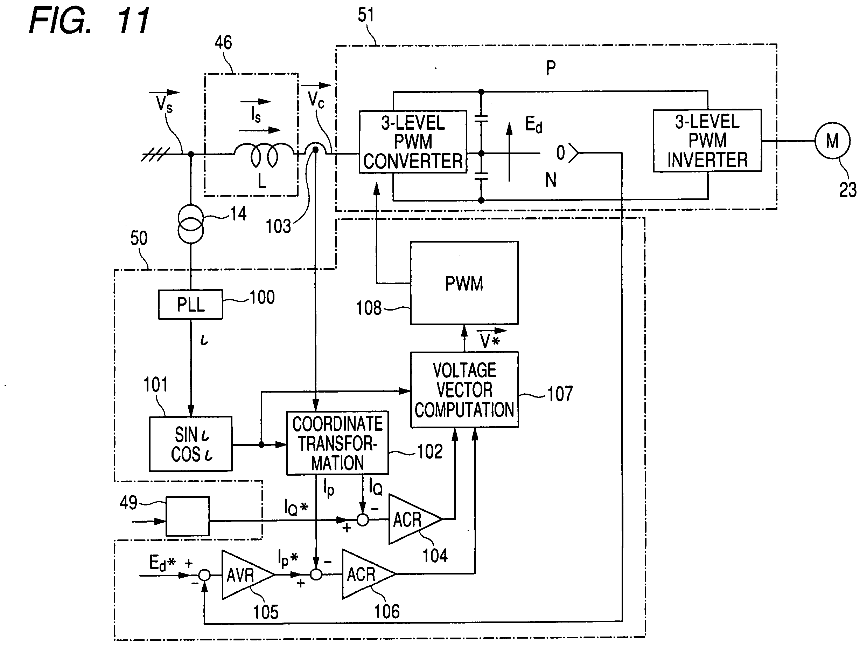

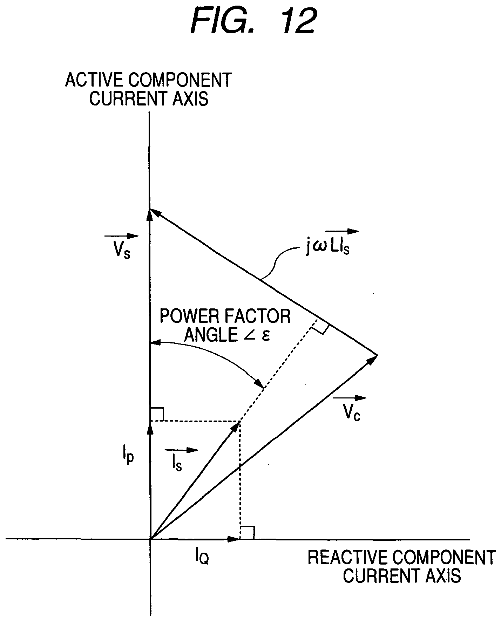

Incidentally, one example of a method for providing a reactive power command value which is an output from the AC voltage control circuit 49 to the main circuit control device 50, and controlling the reactive power in Background Example 1 will be described by reference to FIGS. 11 and 12.

In FIG. 11, the phase 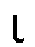 of the electric power system in the common bus 12 is detected by a PLL circuit 100 via the transformer 14. The sine wave sin 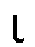 / cosine wave cos 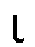 are respectively computed by a sin / cos generation circuit 101, and provided to a coordinate computation circuit 102. The coordinate computation circuit 102 transforms the coordinate system of the main circuit AC current Is detected at a current detector 103, and arithmetically decomposes it into an active component current Iₚ and a reactive component current I_{Q}. The vector relationship between these currents is shown in FIG. 12.

A reactive current control circuit 104 compares a reactive component current command I_{Q}* from the AC voltage control circuit 49 with a reactive component current feedback value I_{Q} which is an output from the coordinate transformation circuit 102, and outputs a reactive component voltage command value corresponding to the reactive component current command I_{Q}*.

On the other hand, a DC voltage control circuit 105 compares a DC voltage command Ed* with a DC voltage feedback value from the power converter 51, and computes and outputs an active component current command value I_{P}* so as to eliminate the deviation. An active current control circuit 106 compares the active component current command I_{P}* with an active component current feedback value Iₚ which is an output from the coordinate transformation circuit 102, and outputs an active component voltage command value corresponding to the active component current command I_{P}*.

Based on the AC voltage command V* obtained by synthesizing the active component voltage command value which is an output from the active current control circuit 106 and the reactive component voltage command value which is an output from the reactive current control circuit 104 by a voltage vector computation circuit 107, the power converter 51 is controlled via a PWM control circuit 108 so as to achieve the reactive power command value which is an output from the AC voltage control circuit 49.

### Embodiment 1

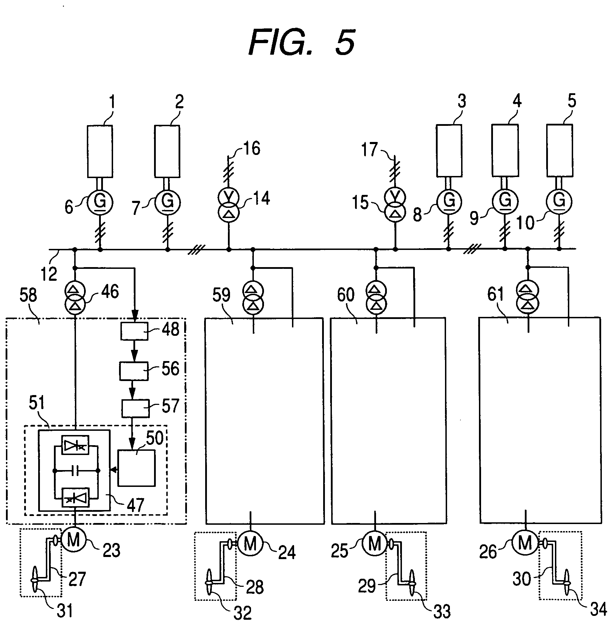

FIG. 5 is a diagram for illustrating an electric motor drive system in accordance with Embodiment 1 for carrying out this invention.

In FIG. 5, the ones given the same reference numerals as those in FIG. 1 are the ones equal to, or corresponding to these. As shown in FIG. 5, an electric power conversion device 58 is composed of, in addition to the configuration of Background Example 1, a voltage detector 48 for detecting the system voltage of the common bus 12, a filter 56 for extracting the oscillation component of the system voltage of the common bus 12, and an AC voltage control circuit 57 for computing a reactive power command value, and outputting it to the main circuit control device 50. Other respective electric power conversion devices 59 to 61 also have the same configuration.

In such a configuration, the filter 56 extracts the oscillation component from the system voltage of the common bus 12 detected at the voltage detector 48, and provides it to the AC voltage control circuit 57. The AC voltage control circuit 57 computes a command value corresponding to the reactive power necessary for suppressing the oscillation component based on the oscillation component of the system voltage of the common bus 12 extracted at the filter 56, and provides it to the main circuit control device 50. Thus, the reactive power exchanged between the electric power conversion device 58 and the common bus 12 is controlled according to the voltage fluctuations of the common bus 12. The other respective electric power conversion devices 59 to 61 also perform the same operation.

Thus, in Embodiment 1, the respective electric power conversion devices 58 to 61 individually detect the voltage of the common bus 12. The oscillation component of the system voltage is extracted via the filter 56 from the detected voltage, and the reactive power exchanged with the common bus 12 is suppressed based on the oscillation component. Therefore, it is possible to keep the voltage of the common bus 12 at a prescribed value, and to suppress the oscillation of the voltage of the electric power system. These enable more stable operation of the electric motors.

### Background Example 2

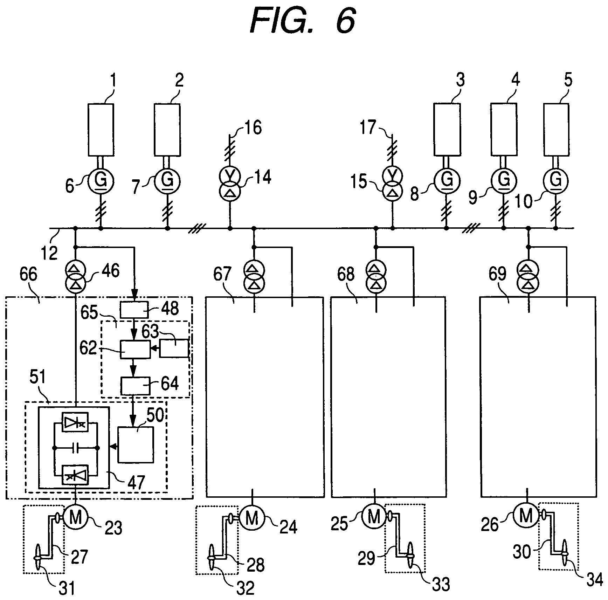

FIG. 6 is a diagram for illustrating an electric motor drive system in accordance with Background Example 2.

In FIG. 6, the ones given the same reference numerals as those in FIG. 1 are the ones equal to, or corresponding to these. As shown in FIG. 6, an electric power conversion device 66 is composed of, in addition to the configuration of Background Example 1, the voltage detector 48 for detecting the system voltage of the common bus 12, a deviation computation circuit with a dead zone 62 for applying a dead zone to the deviation between the system voltage detected value of the common bus 12 and the reference voltage value of a reference voltage value setting device 63, and an AC voltage control circuit 64 for computing an output command value, and outputting it to the electric power conversion device 51. Other respective electric power conversion devices 67 to 69 also have the same configuration.

In such a configuration, the deviation computation circuit 62 has a dead zone, such that the system voltage detected value of the common bus 12 detected at the voltage detector 48 is compared with the output from the prescribed voltage value setting device 63, and the deviation is taken as zero when it is not larger than a prescribed value, and provided to the AC voltage control circuit 64. The AC voltage control circuit 64 computes a command value corresponding to the reactive power necessary for suppressing the deviation component based on the deviation component of the system voltage of the common bus 12 extracted at the computation unit 62, and provides it to the main circuit control device 50 of the power converter 51. In this case, when the deviation component is not larger than a prescribed value, the output from the AC voltage control circuit 64 does not fluctuate. Therefore, it is possible to inhibit a sensitive operation to a certain degree of fluctuations of the power consumption, and such an operation as to cause disturbance to the control system. In the other respective electric power conversion devices 67 to 69, the same operation is performed.

In Background Example 2 described above, the voltage of the common bus 12 is individually detected. The deviation value between the voltage detected value and the reference value is computed, and a reactive power command value based on the deviation value with a dead zone set therefor is obtained. The reactive power exchanged with the common bus 12 is controlled based on the reactive power command value. Therefore, it is possible to suppress the oscillation of the voltage of the electric power system, which enables the more stable operation of the electric motors.

### Embodiment 2

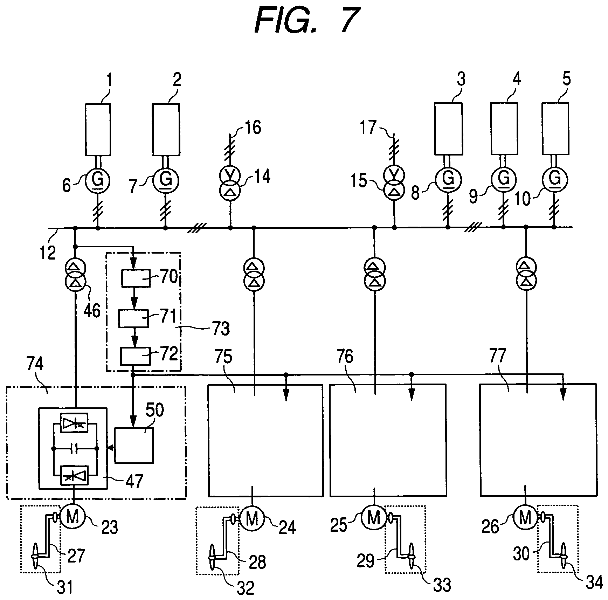

FIG. 7 is a diagram for illustrating an electric motor drive system in accordance with Embodiment 2 for carrying out this invention.

In FIG. 7, the ones given the same reference numerals as those in FIG. 1 are the ones equal to, or corresponding to these. This is equal in basic configuration to Background Example 1, but is different from Background Example 1 in that a common control device 73 is included for a plurality of electric power conversion devices 74 to 77.

The common control device 73 is composed of a voltage detector 70 for detecting the system voltage of the common bus 12, a filter 71 for extracting the oscillation component of the system voltage of the common bus 12, and an AC voltage control circuit 72 for computing reactive power command values, and distributing and outputting them to the electric power conversion devices 74 to 77.

In the common control device 73, the filter 71 extracts the oscillation component from the system voltage of the common bus 12 detected at the voltage detector 48, and provides it to the AC voltage control circuit 72. The AC voltage control circuit 72 computes a command value corresponding to the reactive power necessary for suppressing the oscillation component based on the oscillation component of the system voltage of the common bus 12 extracted at the filter 71, and provides it to the electric power conversion devices 74 to 77.

In Embodiment 2 described above, the oscillation component of the system voltage of the common bus 12 is detected not individually but in common. The oscillation component of the system voltage is extracted from the detected voltage via the filter 71, and the reactive power command value computed based on the oscillation component is distributed to the respective electric power conversion devices 74 to 77. Thus, the reactive power exchanged individually by the respective electric power conversion devices 74 to 77 with the common bus 12 according to the reactive power command value is controlled, thereby to control the amplitude of the common bus voltage to be constant. For this reason, as compared with the case where the AC voltage control circuits 49 are individually disposed as in Background Example 1, this embodiment is less susceptible to the effects of control variations of the AC voltage control circuit 49. Therefore, it is possible to suppress the oscillation of the voltage of the common bus 12 more surely, and the more stable operation of the electric motors becomes possible.

### Embodiment 3

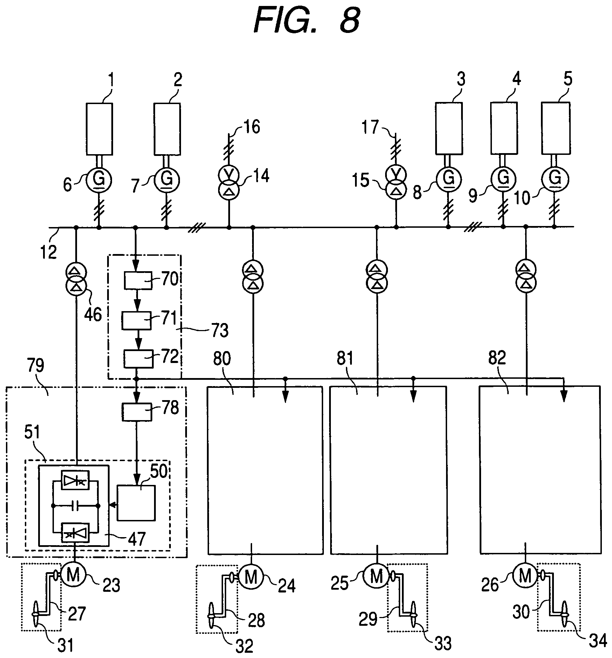

FIG. 8 is a diagram for illustrating an electric motor drive system in accordance with Embodiment 3 for carrying out this invention.

In FIG. 8, the ones given the same reference numerals as those in FIG. 7 are the ones equal to, or corresponding to these. As shown in FIG. 8, an electric power conversion device 79 includes, in addition to the configuration of Embodiment 2, an upper limit value limitation circuit 78 for providing the upper limit value of the reactive power command value between the AC voltage control circuit 72 for computing the reactive power command value, and distributing and outputting it and the main circuit control device 50. Other respective electric power conversion devices 80 to 82 also have the same configuration.

The upper limit value limitation circuit 78 applies a prescribed upper limit value to the output command value of the reactive power provided to the main circuit control device 50 of the electric power conversion device 79 by the AC voltage control circuit 72. This can prevent the power consumption necessary for the control function of the electric motor 23 from being affected. Also in the other respective electric power conversion devices 80 to 82, the same operation is performed.

In Embodiment 3 described above, the respective electric power conversion devices 79 to 82 individually apply a prescribed upper limit value to each reactive power command value thereof, and control the reactive power exchanged between the electric power conversion devices 79 to 82 and the common bus 12. As a result, the amplitude of the common bus voltage is controlled to be constant. Therefore, it is possible to suppress the oscillation of the voltage of the common bus 12, and it is possible to carry out the more stable operation of the electric motors without affecting the power consumption necessary for the control function of the electric motors 23 to 26.

### Embodiment 4

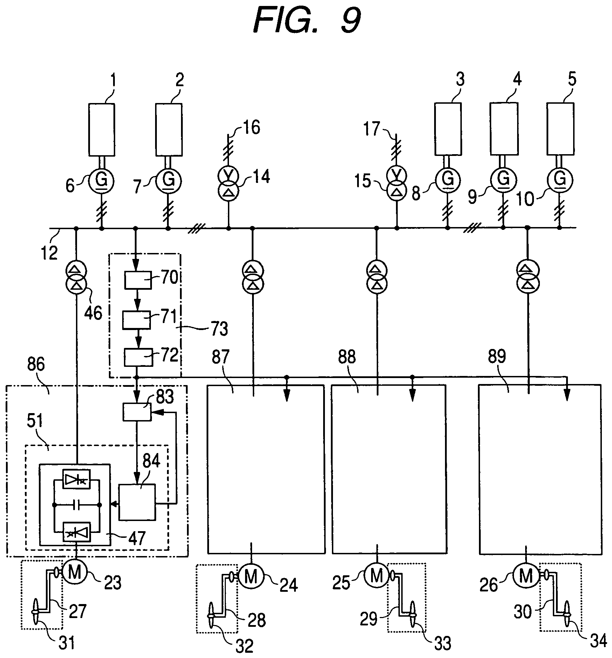

FIG. 9 is a diagram for illustrating an electric motor drive system in accordance with Embodiment 4 for carrying out this invention.

In FIG. 9, the ones given the same reference numerals as those in FIG. 7 are the ones equal to, or corresponding to these. As shown in FIG. 9, an electric power conversion device 86 includes, in addition to the configuration of Embodiment 2, a variable limitation circuit 83 for variably limiting the upper limit value of the reactive power amount command value according to the power consumption of the load, i.e., the fluctuation amount of the active power component of the driving current in the electric motor 23 between the AC voltage control circuit 72 for computing the reactive power command value, and distributing and outputting it and a main circuit control device 84. Incidentally, the main circuit control device 84 has a function of providing a signal changing according to the power consumption state of the load, i.e., the fluctuation amount of the active power component of the driving current in the electric motor 23 to the variable limitation circuit 83. Whereas, other respective electric power conversion devices 87 to 89 also have the same configuration.

The variable limitation circuit 83 applies a prescribed upper limit value to the output command value of the reactive power provided to the main circuit control device 84 of the electric power conversion device 83 by the AC voltage control circuit 72. This can prevent the power consumption necessary for the control function of the electric motor 23 from being affected. Further, by making the upper limit value variable according to the fluctuation amount of the active power component of the driving current in the electric motor 23, it is also possible to ensure the voltage control allowance of the electric power system. Also in the other respective electric power conversion devices 87 to 89, the same operation is performed.

In Embodiment 4 described above, the respective electric power conversion devices 86 to 89 individually apply an upper limit value changing according to the fluctuation amount of the active power component of each driving current in the respective electric motors 23 to 26 to the reactive power command value. Thus, each reactive power exchanged between the respective electric power conversion devices 86 to 89 and the common bus 12 is controlled, thereby to control the amplitude of the common bus voltage to be constant. Therefore, it is possible to suppress the oscillation of the voltage of the common bus 12, and it is possible to carry out the more stable operation of the electric motors without affecting the power consumption necessary for the control function of the electric motors 23 to 26.

### Background Example 3

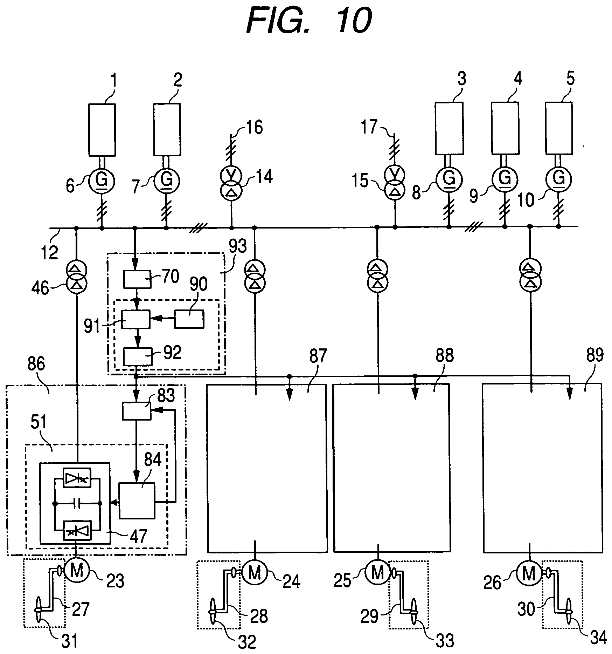

FIG. 10 is a diagram for illustrating an electric motor drive system in accordance with Background Example 3.

In FIG. 10, the ones given the same reference numerals as those in FIG. 7 are the ones equal to, or corresponding to these. As shown in FIG. 10, a common control device 93 is composed of the voltage detector 70 for detecting the system voltage of the common bus 12, a deviation computation circuit with a dead zone 91 for applying a dead zone to the deviation between the system voltage detected value of the common bus 12 and the reference voltage value of a reference voltage value setting device 90, and an AC voltage control circuit 92 for computing a reactive power command value, and outputting it to the electric power conversion device 86.

The deviation computation circuit 91 has a dead zone, such that the system voltage detected value of the common bus 12 detected at the voltage detector 70 is compared with the output from the reference voltage value setting device 90, and the deviation is taken as zero when it is not larger than a prescribed value, and provided to the AC voltage control circuit 92. The AC voltage control circuit 92 computes a command value corresponding to the reactive power necessary for suppressing the deviation component based on the deviation component of the system voltage of the common bus 12 extracted at the computation unit 91, and provides it to the electric power conversion devices 86 to 89. In this case, when the deviation component is not larger than a prescribed value, the output from the AC voltage control circuit 92 does not fluctuate. Therefore, it is possible to inhibit a sensitive operation to a certain degree of fluctuations of the power consumption, and such an operation as to cause disturbance to the control system.

In Background Example 3 described above, the respective electric power conversion devices 86 to 89 detect the voltage of the common bus 12. The deviation value between the voltage detected value and the previously set reference voltage value is computed, and the reactive power command value based on the deviation value with a dead zone set therefor is distributed to the electric power conversion devices 86 to 89. The respective electric power conversion devices 86 to 89 individually apply an upper limit value changing according to the fluctuation amount of the active power component of the driving current in the respective electric motors 23 to 26 to the reactive power command value. Thus, the reactive power exchanged with the common bus 12 is controlled. Therefore, it is possible to suppress the oscillation of the voltage of the common bus 12, and it is possible to carry out the more stable operation of the electric motors without affecting the power consumption necessary for the control function of the electric motors.

### Industrial Applicability

This invention is particularly used as an electric motor drive system for an LNG plant or marine electric propulsion.

## Claims

1. An electric motor drive system, comprising:
a mechanical power generation device (1 to 5) for outputting a mechanical power by combustion of a liquid or gas fuel;
a plurality of generators (6 to 10) to be driven by the mechanical power generation device (1 to 5) and for generating an AC voltage;
a common bus (12) to which the output terminals of the plurality of the generators (6 to 10) are connected in parallel;
a plurality of electric power conversion devices (52 to 55; 58 to 61; 66 to 69; 74 to 77; 79 to 82; 86 to 89) for outputting an AC voltage of variable amplitude and variable frequency; and
a plurality of electric motors (23 to 26) respectively connected to the respective electric power conversion devices, and for driving a load machine,
**characterized in that**
the electric power conversion devices are configured to individually detect the voltage of the common bus (12), extract an oscillation component of a system voltage from the detected voltage of the common bus (12) via a filter (56), and control the reactive power exchanged with the common bus (12) based on the oscillation component, thereby to control the amplitude of the common bus voltage to be constant.

2. An electric motor drive system, comprising:
a mechanical power generation device (1 to 5) for outputting a mechanical power by combustion of a liquid or gas fuel;
a plurality of generators (6 to 10) to be driven by the mechanical power generation device (1 to 5) and for generating an AC voltage;
a common bus (12) to which the output terminals of the plurality of the generators (6 to 10) are connected in parallel;
a plurality of electric power conversion devices (52 to 55; 58 to 61; 66 to 69; 74 to 77; 79 to 82; 86 to 89) for outputting an AC voltage of variable amplitude and variable frequency; and
a plurality of electric motors (23 to 26) respectively connected to the respective electric power conversion devices, and for driving a load machine,
**characterized in that**
the respective electric power conversion devices are configured to detect the voltage of the common bus (12) and control the reactive power exchanged with the common bus (12) according to detected fluctuations of the common bus voltage, thereby to control the amplitude of the common bus voltage to be constant, and
the electric motor drive system further comprises:
a voltage detector (70) for detecting the voltage of the common bus (12);
a filter (71) for extracting an oscillation component of the system voltage from the detected voltage; and
an AC voltage control circuit (72) configured to distribute to the respective electric power conversion devices (74 to 77; 79 to 82; 86 to 89) a reactive power command value computed based on the oscillation component, wherein the respective electric power conversion devices are configured to individually control the reactive power to be exchanged with the common bus (12) according to the reactive power command value.

3. The electric motor drive system according to claim 2, wherein the respective electric power conversion devices (79 to 82; 86 to 89) are configured to individually apply a prescribed upper limit value to the reactive power command value.

4. The electric motor drive system according to claim 2, wherein the respective electric power conversion devices (86 to 89) are configured to individually apply an upper limit value changing according to the fluctuation amount of an active power component of a driving current in the electric motors (23 to 26) to the reactive power command value.

## Patentansprüche

1. Elektromotorisches Antriebssystem, umfassend:
eine mechanische Leistungserzeugungsvorrichtung (1 bis 5) zum Ausgeben einer mechanischen Leistung durch Verbrennen eines flüssigen oder gasförmigen Kraftstoffs;
eine Vielzahl von Generatoren (6 bis 10), die von der mechanischen Leistungserzeugungsvorrichtung (1 bis 5) angetrieben werden sollen, und zum Erzeugen einer Wechselspannung;
einen gemeinsamen Bus (12), an den die Ausgangsanschlüsse der Vielzahl der Generatoren (6 bis 10) parallel angeschlossen sind;
eine Vielzahl von elektrischen Leistungsumwandlungsvorrichtungen (52 bis 55; 58 bis 61; 66 bis 69; 74 bis 77; 79 bis 82; 86 bis 89) zum Ausgeben einer Wechselspannung von variabler Amplitude und variabler Frequenz; und
eine Vielzahl von Elektromotoren (23 bis 26), die jeweils an die jeweiligen elektrischen Leistungsumwandlungsvorrichtungen angeschlossen sind, und zum Antreiben einer Lastmaschine,
**dadurch gekennzeichnet, dass**
die elektrischen Leistungsumwandlungsvorrichtungen so konfiguriert sind, dass sie die Spannung des gemeinsamen Busses (12) einzeln erkennen, über ein Filter (56) aus der erkannten Spannung des gemeinsamen Busses (12) eine Oszillationskomponente einer Systemspannung extrahieren, und die Blindleistung, die mit dem gemeinsamen Bus (12) ausgetauscht wird, auf Basis der Oszillationskomponente steuern, um dadurch die Amplitude der gemeinsamen Busspannung so zu steuern, dass sie konstant ist.

2. Elektromotorisches Antriebssystem, umfassend:
eine mechanische Leistungserzeugungsvorrichtung (1 bis 5) zum Ausgeben einer mechanischen Leistung durch Verbrennen eines flüssigen oder gasförmigen Kraftstoffs;
eine Vielzahl von Generatoren (6 bis 10), die von der mechanischen Leistungserzeugungsvorrichtung (1 bis 5) angetrieben werden sollen, und zum Erzeugen einer Wechselspannung;
einen gemeinsamen Bus (12), an den die Ausgangsanschlüsse der Vielzahl der Generatoren (6 bis 10) parallel angeschlossen sind;
eine Vielzahl von elektrischen Leistungsumwandlungsvorrichtungen (52 bis 55; 58 bis 61; 66 bis 69; 74 bis 77; 79 bis 82; 86 bis 89) zum Ausgeben einer Wechselspannung von variabler Amplitude und variabler Frequenz; und
eine Vielzahl von Elektromotoren (23 bis 26), die jeweils an die jeweiligen elektrischen Leistungsumwandlungsvorrichtungen angeschlossen sind, und zum Antreiben einer Lastmaschine,
**dadurch gekennzeichnet, dass**
die jeweiligen elektrischen Leistungsumwandlungsvorrichtungen so konfiguriert sind, dass sie die Spannung des gemeinsamen Busses (12) erkennen und die Blindleistung, die mit dem gemeinsamen Bus (12) ausgetauscht wird, gemäß erkannten Schwankungen der gemeinsamen Busspannung steuern, um dadurch die Amplitude der gemeinsamen Busspannung so zu steuern, dass sie konstant ist, und
das elektromotorische Antriebssystem weiter umfasst:
einen Spannungsdetektor (70) zum Erkennen der Spannung des gemeinsamen Busses (12);
ein Filter (71) zum Extrahieren einer Oszillationskomponente der Systemspannung aus der erkannten Spannung; und
eine Wechselspannungs-Steuerschaltung (72), die so konfiguriert ist, dass sie einen auf Basis der Oszillationskomponente berechneten Blindleistungssollwert an die jeweiligen elektrischen Leistungsumwandlungsvorrichtungen (74 bis 77; 79 bis 82; 86 bis 89) verteilt, wobei die jeweiligen elektrischen Leistungsumwandlungsvorrichtungen so konfiguriert sind, dass sie die Blindleistung, die mit dem gemeinsamen Bus (12) ausgetauscht werden soll, einzeln gemäß dem Blindleistungssollwert steuern.

3. Elektromotorisches Antriebssystem nach Anspruch 2, wobei die jeweiligen elektrischen Leistungsumwandlungsvorrichtungen (79 bis 82; 86 bis 89) so konfiguriert sind, dass sie einzeln einen vorgeschriebenen oberen Grenzwert auf den Blindleistungssollwert anwenden.

4. Elektromotorisches Antriebssystem nach Anspruch 2, wobei die jeweiligen elektrischen Leistungsumwandlungsvorrichtungen (86 bis 89) so konfiguriert sind, dass sie einzeln einen oberen Grenzwert, der sich gemäß dem Schwankungsbetrag einer Wirkleistungskomponente eines Antriebsstroms in den Elektromotoren (23 bis 26) ändert, auf den Blindleistungssollwert anwenden.

## Revendications

1. Système de pilotage de moteur électrique, comprenant :
un dispositif de production de puissance mécanique (1 à 5) pour sortir une puissance mécanique par combustion d'un carburant liquide ou gazeux ;
une pluralité de générateurs (6 à 10) à entraîner par le dispositif de production de puissance mécanique (1 à 5) et pour produire une tension en CA ;
un bus commun (12) auquel les bornes de sortie de la pluralité des générateurs (6 à 10) sont reliées en parallèle ;
une pluralité de dispositifs de transformation d'énergie électrique (52 à 55 ; 58 à 61; 66 à 69 ; 74 à 77 ; 79 à 82 ; 86 à 89) pour sortir une tension en CA d'amplitude variable et de fréquence variable ; et
une pluralité de moteurs électriques (23 à 26) respectivement reliés aux dispositifs de transformation d'énergie électrique respectifs, et pour entraîner une machine de charge,
**caractérisé en ce que**
les dispositifs de transformation d'énergie électrique sont configurés pour détecter individuellement la tension du bus commun (12), extraire une composante d'oscillation d'une tension de système à partir de la tension détectée du bus commun (12) via un filtre (56), et commander la puissance réactive échangée avec le bus commun (12) sur la base de la composante d'oscillation, pour commander de ce fait l'amplitude de la tension de bus commun pour qu'elle soit constante.

2. Système de pilotage de moteur électrique, comprenant :
un dispositif de production de puissance mécanique (1 à 5) pour sortir une puissance mécanique par combustion d'un carburant liquide ou gazeux ;
une pluralité de générateurs (6 à 10) à entraîner par le dispositif de production de puissance mécanique (1 à 5) et pour produire une tension en CA ;
un bus commun (12) auquel les bornes de sortie de la pluralité des générateurs (6 à 10) sont reliées en parallèle ;
une pluralité de dispositifs de transformation d'énergie électrique (52 à 55 ; 58 à 61; 66 à 69 ; 74 à 77 ; 79 à 82 ; 86 à 89) pour sortir une tension en CA d'amplitude variable et de fréquence variable ; et
une pluralité de moteurs électriques (23 à 26) respectivement reliés aux dispositifs de transformation d'énergie électrique respectifs et pour entraîner une machine de charge,
**caractérisé en ce que**
les dispositifs de transformation d'énergie électrique respectifs sont configurés pour détecter la tension du bus commun (12) et commander la puissance réactive échangée avec le bus commun (12) selon des fluctuations détectées de la tension de bus commun, pour commander de ce fait l'amplitude de la tension de bus commun pour qu'elle soit constante, et
le système de pilotage de moteur électrique comprend en outre :
un détecteur de tension (70) pour détecter la tension du bus commun (12) ;
un filtre (71) pour extraire une composante d'oscillation de la tension de système à partir de la tension détectée ; et
un circuit de commande de tension en CA (72) configuré pour distribuer aux dispositifs de transformation d'énergie électrique respectifs (74 à 77 ; 79 à 82 ; 86 à 89) une valeur d'ordre de puissance réactive calculée sur la base de la composante d'oscillation, dans lequel les dispositifs de transformation d'énergie électrique respectifs sont configurés pour commander individuellement la puissance réactive à échanger avec le bus commun (12) selon la valeur d'ordre de puissance réactive.

3. Système de pilotage de moteur électrique selon la revendication 2, dans lequel les dispositifs de transformation d'énergie électrique respectifs (79 à 82 ; 86 à 89) sont configurés pour appliquer individuellement une valeur de limite supérieure prédéterminée à la valeur d'ordre de puissance réactive.

4. Système de pilotage de moteur électrique selon la revendication 2, dans lequel les dispositifs de transformation d'énergie électrique respectifs (86 à 89) sont configurés pour appliquer individuellement une valeur de limite supérieure changeant selon la quantité de fluctuation d'une composante de puissance active d'un courant de pilotage dans les moteurs électriques (23 à 26) à la valeur d'ordre de puissance réactive.
